# EUROPEAN PATENT APPLICATION

(11) **EP 1 628 486 A1**
(43) Date of publication of application: **22.02.2006**
(21) Application number: 05017901.9
(22) Date of filing: 17.08.2005
(51) Int. Cl.: H04N 7/26, H04N 7/30

(54) **Image transmission apparatus**

(30) Priority: 18.08.2004 JP 2004238816
(71) Applicant: Olympus Corporation, Shibuya-ku, Tokyo (JP)
(72) Inventor: Kotouda, Kaoru, 2-3, Kuboyama-cho Hachioji-shi Tokyo (JP)
(74) Representative: Winter, Brandl, Fürniss, Hübner Röss, Kaiser, Polte Partnerschaft Patent- und Rechtsanwaltskanzlei

(57) **Abstract**

An image transmission apparatus having an image pickup unit 11 for outputting image data of a subject, for picking-up images of the subject and transmitting image data of the subject at a first frame-rate and a second frame-rate lower than the first frame-rate, includes image compressing unit (13 to 16), a storage unit 17, and a second unit 18. The image compressing units (13 to 16) switch compressing rates so that the amount of image data after compression per unit time of the second frame-rate is not more than the amount of image data after compression per unit time of the first frame-rate, compress the image data outputted from the image pickup unit 11 and output compressed data. The storage unit 17 temporarily stores the compressed data. The sending unit 18 sends, at a fixed baud rate, the compressed data stored in the storage unit.

## Description

### BACKGROUND OF THE INVENTION

### 1. Field of the Invention

The present invention relates to an image transmission apparatus for switching a moving image and a still image, picking-up an image, compressing the image, and externally transmitting the compressed data at a predetermined rate.

### 2. Description of the Related Art

For example, Japanese Patent Publication No. 2790538 proposes a transmission system of a moving image and a still image. Fig. 21 is schematic block diagram. Reference numeral 11 denotes an external AV (Audio Visual) signal capturing unit, reference numeral 12 denotes a communication control unit, reference numeral 13 denotes a still-image CODEC (Coder Decoder) unit, reference numeral 14 denotes an image bus, reference numeral 15 denotes a still-image memory, reference numeral 17 denotes a display, reference numeral 19 denotes an AV input device, such as a TV camera or a VTR, reference numeral 21 denotes a display control unit, reference numeral 22 denotes an image bus control unit, reference numeral 23a denotes a sending buffer, reference numeral 23b denotes a receiving buffer, reference numeral 24 denotes an amplifier unit, reference numeral 29 denotes a bus buffer amplifier which is switched to operation or non-operation in accordance with a control signal BS.

As disclosed in Japanese Patent Publication No. 2790538, in the transmission of a still image, a still image, which is picked-up, is stored in the still-image memory 15, is compressed, and is then transmitted. In the transmission of a moving image, pixels are thinned-out from the picked-up image to reduce the number of pixels. After storing the image in the still-image memory 15, the image is compressed and transmitted. As a result, the moving image is simply transmitted through the processing common to that of the transmission of the still image.

Generally, when the transmission apparatus of the moving image and the still image is applied to a medical system, the still-image data with high precision needs to be used for diagnosis, and the moving-image data needs to have a high number of frames transmitted per second even if the image quality deteriorates to some degree. Therefore, the size decision of buffer memory depending on the still image causes a problem in which memory capacity increases.

### SUMMARY OF THE INVENTION

It is an object of the present invention to provide an image transmission apparatus that reduces the amount of memory for communication without deteriorating the image quality (number of pixels) in the case of transmitting the moving image data and the still image data.

According to the present invention, there is provided an image transmission apparatus having an image pickup unit for outputting image data of a subject, for picking-up images of the subject and transmitting the image data of the subject at a first frame-rate and a second frame-rate lower than the first frame-rate, comprising: an image compressing unit that switches compressing rates such that the amount of image data after compression per unit time of the second frame-rate is not more than the amount of image data after compression per unit time of the first frame-rate and that compresses the image data outputted from the image pickup unit and outputs the compressed data; a storage unit that temporarily stores the compressed data; and a sending unit that sends, at a fixed baud rate, the compressed data stored in the storage unit.

According to the present invention, in the image transmission apparatus, the image compressing unit preferably comprises a dividing unit that divides the compressed data of one frame by a predetermined amount of data upon sending the image data at the second frame-rate.

According to the present invention, in the image transmission apparatus, preferably, the image compressing unit comprises: an image position detecting unit that detects the position on a screen of the image data outputted by the image pickup unit and outputs image position detecting information; and the dividing unit divides the compressed data of one frame in accordance with the image position detecting information outputted by the image position detecting unit.

Further, according to the present invention, in the image transmission apparatus, preferably, the image compressing unit comprises: a storage-amount monitoring unit that monitors the amount of compressed data outputted to the storage unit and outputs storage-amount detecting information; and the dividing unit divides the compressed data of one frame based on the storage-amount detecting information.

Further, according to the present invention, in the image transmission apparatus, preferably, the image compressing unit comprises: a blocking unit that blocks the image data of one frame outputted by the image pickup unit every predetermined image size, and outputs blocked image data; and the image compressing unit compresses the blocked image data as one unit, and the dividing unit divides the compressed data of one frame based on a unit of the block.

### BRIEF DESCRIPTION OF THE DRAWINGS

Fig. 1 is a block diagram schematically showing the configuration of an image transmission apparatus for shooting the interior of the body according to the first embodiment of the present invention;
Fig. 2 is block diagram showing an endoscope system to which the image transmission apparatus for shooting the interior of the body is applied according to the first embodiment of the present invention;
Fig. 3 is a schematic explanatory diagram for the configuration of a dual-port memory shown in Fig. 1;
Fig. 4 is a timing chart for explaining the operation for transmitting a moving image shown in Fig. 1;
Fig. 5 is a timing chart for explaining the operation for transmitting a still image shown in Fig. 1;
Fig. 6 is block diagram showing the configuration of a compressing unit shown in Fig. 1;
Fig. 7 is an explanatory diagram for explaining the blocking operation of the image;
Fig. 8 is a timing chart for explaining the operation of the division of the still image shown in Fig. 6;
Fig. 9 is block diagram showing the outline of a monitoring camera system to which an image transmission apparatus for a monitoring camera is applied according to the second embodiment of the present invention;
Fig. 10 is block diagram showing the schematic configuration of the image transmission apparatus for a monitoring camera according to the second embodiment of the present invention;
Fig. 11 is a schematic explanatory diagram of the configuration of a single-port memory shown in Fig. 10;
Fig. 12 is a timing chart for explaining the operation shown in Fig. 11;
Fig. 13 is a timing chart for explaining the operation for transmitting the moving image shown in Fig. 10;
Fig. 14 is an access timing chart of a single-port memory shown in Fig. 10;
Fig. 15 is a connecting diagram of an image sensor shown in Fig, 10;
Fig. 16 is a timing chart for reading out by the image sensor shown in Fig. 15;
Fig. 17 is a timing chart for explaining the operation for transmitting the still image shown in Fig. 10;
Fig. 18 is block diagram showing the configuration of a compressing unit shown in Fig. 10;
Fig. 19 is a timing chart for explaining the operation for dividing the still image shown in Fig. 18;
Fig. 20 is an explanatory diagram of image areas; and

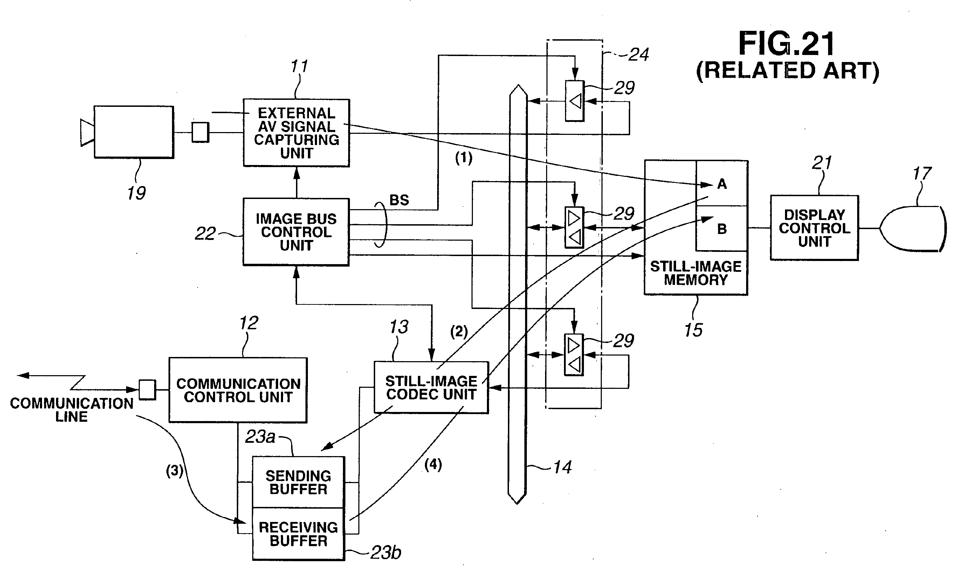

Fig. 21 is block diagram schematically showing a conventional transmission system of the moving image and the still image.

### DETAILED DESCRIPTION OF THE PREFERRED EMBODIMENTS

Hereinbelow, a description is given of embodiments of the present invention with reference to the drawings.

### (First embodiment)

A description is given of an endoscope system, as an example, to which an image transmission apparatus is applied according to the first embodiment of the present invention.

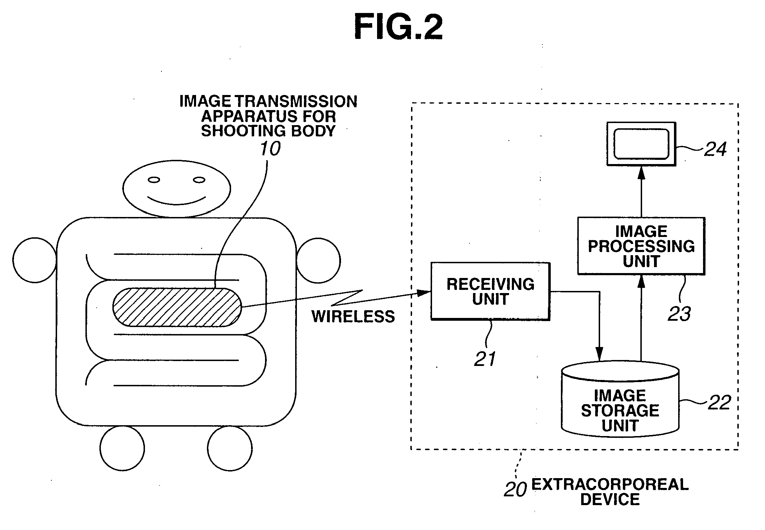

Fig. 2 shows the outline of the endoscope system according to the present invention. First, Fig. 2 will be described.

The endoscope system comprises: an image transmission apparatus 10 for shooting the interior of the body that shoots the image of the body cavity and sends image data by wireless manner; and an extracorporeal device 20 that stores, analyzes, and displays the image sent by the image transmission apparatus 10 for shooting the interior of the body according to the first embodiment of the present invention.

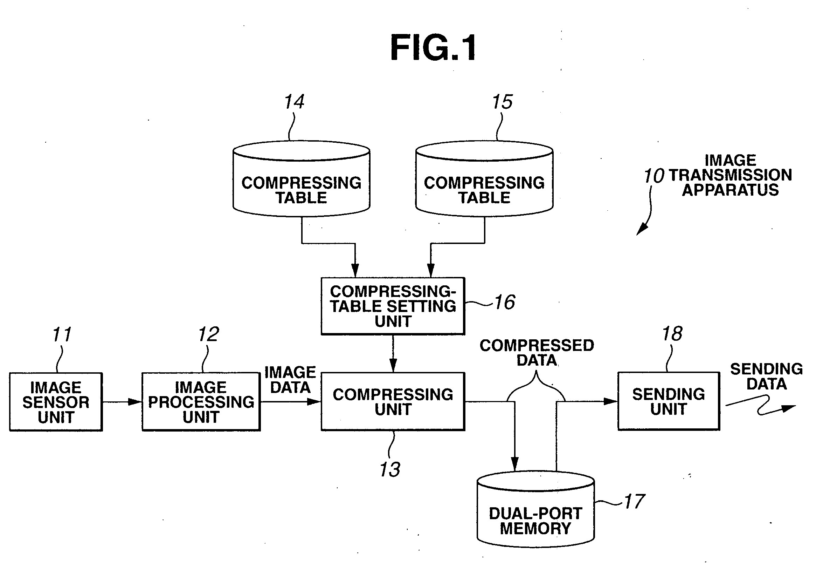

The image transmission apparatus 10 for shooting the interior of the body sends extracorporeally the image that is shot while passing through the organ in the body. This will be described later with reference to Fig. 1.

The extracorporeal device 20 comprises: a receiving unit 21 that receives a wireless signal from the image transmission apparatus 10 for shooting the interior of the body and obtains the image data; an image storage unit 22 that temporarily stores the image data from the receiving unit 21; an image processing unit 23 that analyzes the image data stored in the image storage unit 22 and converts the data into a TV signal, serving as a display signal; and a monitor 24 that displays the TV signal from the image processing unit 23.

In the endoscope system, the shooting of moving image and the shooting of still image are individually used depending on the portion of application. For example, in the case of shooting the organ in which the passage speed is fast, the shooting of the moving image is necessary to certainly shoot the lesion. On the other hand, in the case of shooting the organ in which the passage speed is slow, the observation takes a long time and therefore the shooting of the still image may be performed. According to the first embodiment, the power is supplied from a battery in the image transmission apparatus for shooting the interior of the body. Preferably, to suppress the power consumption, the long-time operation needs the reduction in frame rate so as to prevent the shooting of unnecessary image.

Generally, in the case of using in a medical system the transmission apparatus that transmits moving images and still images, the still-image data needs to be precise for diagnosis, and moving-image data needs to increase the number of frames transmitted per second even if the image quality deteriorates. Therefore, the size of buffer memory is determined depending on the still image, thereby increasing the memory capacity.

Fig. 1 shows the schematic configuration of the image transmission apparatus for shooting the interior of the body according to the first embodiment of the present invention.

The image transmission apparatus 10 for shooting the interior of the body according to the first embodiment comprises: an image sensor unit 11, serving as an image pickup unit, that picks-up the image by a CCD image sensor; an image processing unit 12 that performs A/D conversion, pixel defect correction, white balance, and γ correction of the image picked-up by the image sensor unit 11; a compressing unit 13 that compresses the processed image data by JPEG system; a compressing-table setting unit 16 that sets, to the compressing unit 13, a compressing table 14 for still image and a compressing table 15 for moving image with different compressing rates respectively; a dual-port memory 17, serving as a storage unit, that temporarily stores the compressed data; and a sending unit 18 that reads out the data stored in the dual-port memory 17 and sends a wireless signal to the extracorporeal device 20 at a fixed baud rate. The compressing unit 13, the compressing table 14, the compressing table 15, and the compressing-table setting unit 16 constitute an image compressing unit.

The compressing rates set by the compressing tables 14 and 15 are set such that the amount of image data after compression per unit time of the still image (image of a second frame-rate) is the amount of image data after compression per unit time of a moving image (image of a first frame-rate) or less. The compressing rate of 1/10 is provided, as a table for still image and the compressing rate of 1/20 is provided, as a table for moving image. That is, the compressing table 14 is that of the compressing rate of 1/10, and the compressing table 15 is that of the compressing rate of 1/20.

The image sensor unit 11 is to be an image sensor that outputs a CIF (Common Intermediate Format) image of about 100,000 (352x288) pixels.

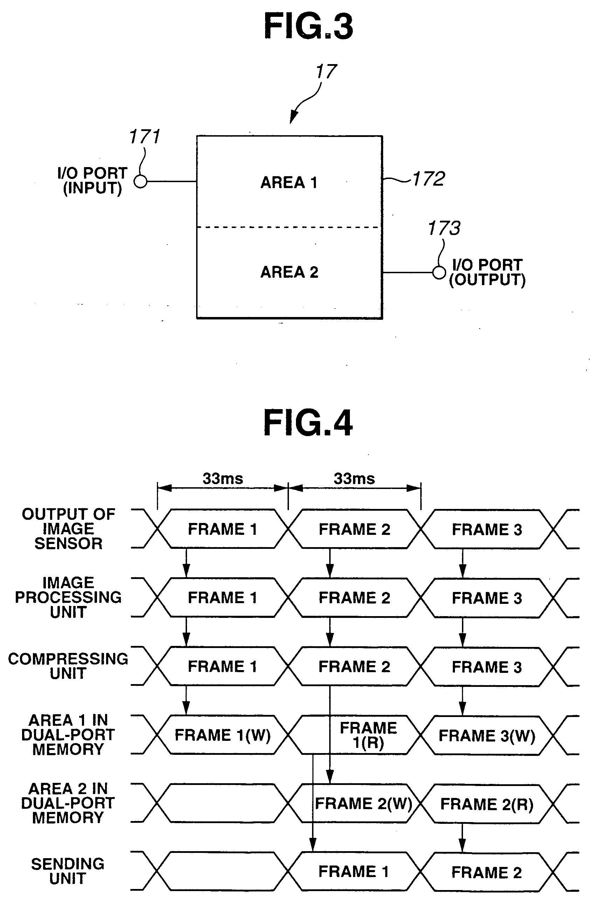

Fig. 3 is a diagram schematically showing the configuration of the dual-port memory 17 shown in Fig. 1.

The dual-port memory 17 comprises two input/output ports 171 and 173 and a memory unit 172. According to the first embodiment, the input/output port 171 is used as an input port and the compressed image data from the compressing unit 13 is written to the memory unit 172 having two areas (areas 1 and 2), and the input/output port 173 is used as an output port and the image data written to the memory unit 172 is read out to the sending unit 18.

The compressing unit 13 compresses the original image data to 1/20 in the transmission of moving image, and the compressed data is written to the dual-port memory 17. The compressing unit 13 compresses the original image data to 1/10 in the transmission of the still image, and the compressed data is written to the dual-port memory 17.

The dual-port memory 17 for storing the compressed data has two areas. The two areas are used as, buffers for two steps, for parallel operation of the first step of image processing and image compression and of the second step of sending operation.

As described above, according to the first embodiment, the dual-port memory 17 is divided into two areas (areas 1 and 2) for writing and readout operation. First, the compressed data of the image data is written to the area 1, and when the writing operation to the area 1 ends, the writing operation to the area 2 starts. Upon starting the writing operation to the area 2, the dual-port memory 17 outputs the compressed data written to the area 1 in accordance with the readout request from the sending unit 18, and the sending unit 18 sends the data. Similarly, after ending the writing operation to the area 2 of the compressed data, upon starting the writing operation of the compressed data to the area 1, the compressed data written to the area 2 is read out in accordance with the readout request from the sending unit 18, and is sent by the sending unit 18. That is, upon writing the data to the area 1, the dual-port memory 17 reads out the data from the area 2. Upon writing the data to the area 2, the dual-port memory 17 reads out the data from the area 1.

The memory capacity of the dual-port memory 17 is set such that the amount of compressed data of one frame in the transmission of the moving image is written to one of the areas 1 and 2 in the dual-port memory 17. That is, the memory capacity of the dual-port memory 17 corresponds to the amount of compressed data of two frames in the transmission of the moving image. As described above, since the compressing rate of the still image is set to 1/2 of that of the moving image, in the transmission of the still image, only 1/2 of compressed data of one frame of the still image is written to one of the areas 1 and 2 of the dual-port memory 17. Therefore, in the transmission of the still image, the compressed data of one frame of the still image is divided to two areas of first half-portion of frame and second half-portion, and the divided data is written or read to/from the areas 1 and 2.

Next, a description is given of the operation for transmitting the moving image shown in Fig. 1 with reference to a timing chart shown in Fig. 4. Upon transmitting the moving image, the image sensor unit 11 outputs 30 images per second (1/30 sec = period of about 33 ms), serving as a first frame-rate.

The image processing unit 12 and the compressing unit 13 perform processing on the image outputted from the image sensor unit 11 in realtime. The compressing unit 13 compresses the image to 1/20 by JPEG system. That is, as shown in the timing chart in the transmission of the moving image shown in Fig. 4, during the processing of a frame 1 by the compressing unit 13, the compressing unit 13 writes the compressed data of the frame 1 to the area 1, writes the compressed data of a frame 2 to the area 2, and writes the compressed data of a frame 3 to the area 1 again. During processing of the frame 2 by the compressing unit 13, the sending unit 18 reads out the compressed data of the frame 1 written to the area 1 by the compressing unit 13 and sends the compressed data. During processing the frame 3 by the compressing unit 13, the sending unit 18 reads out the compressed data of the frame 2 written to the area 2 and sends the data.

As described above, the transmission of the moving image uses buffers having two steps and the blocks continuously operate, thereby continuously performing the processing. The capacities of the areas 1 and 2 become the size of the compression to 1/20 of the image data of one frame.

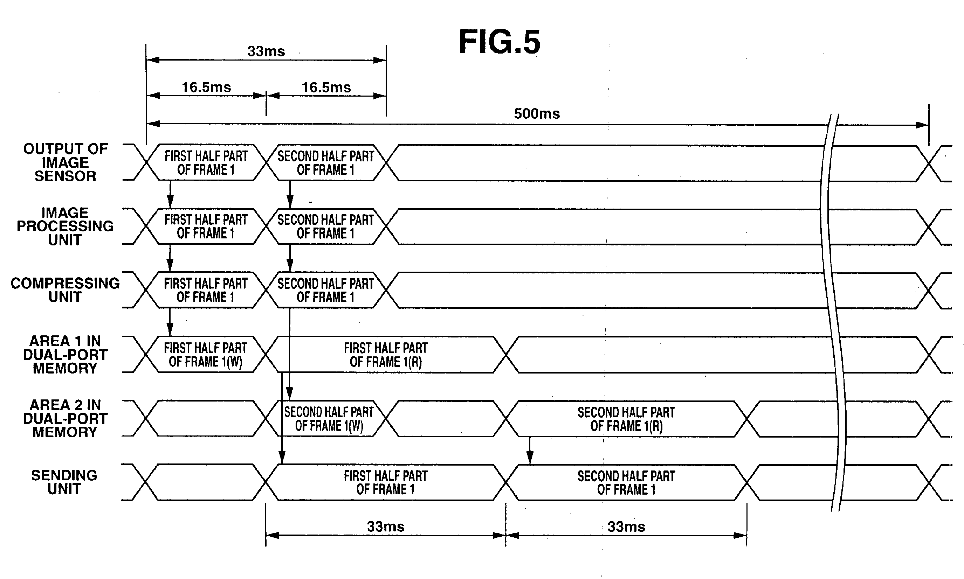

Next, a description is given of the operation for transmitting the still image as shown in Fig. 1 with reference to a timing chart shown in Fig. 5. Upon transmitting the still image, the image sensor unit 11 transmits two images per second (period of 500 ms), serving as the second frame-rate.

Similarly to the transmission of the moving image, the image processing unit 12 and the compressing unit 13 perform processing on the inputted images in real time. For the purpose of obtaining the high image-quality, the compressing unit 13 compresses the images to 1/10, serving as twice time of the compressing rate of the moving image, to transmit the still images.

As described above, since the compression of data size is 1/20 in the transmission of the moving image in the two areas on the dual-port memory 17, only data having 0.5 frame is stored in one of the two areas in the transmission of the still image. Therefore, the compressed data is stored in the areas 1 and 2 by dividing the compressed data of one frame.

As shown in the timing chart of transmission of the still image shown in Fig. 5, the still image having one frame is divided into the first half and second half parts, and is then subjected each part to the image processing, compression, and storage to the dual-port memory 17. As described above, after ending the storage of the first half part of frame into the area 1, the second half part of frame is stored in the area 2. Similarly, the sending unit 18 reads out the compressed data of the first half part of frame from the area 1 and then starts the sending operation. In the transmission of the moving image in which the image data is compressed to 1/20, the compressing time of the image is equal to the transmission time. However, in the transmission of the still image in which the image data is compressed to 1/10, the transmission time requires the double time of the compressing time of the image. For the purpose of the reduction of power consumption, it is preferable that the overhead for communication is reduced and the sending unit 18 continuously operates. That is, advantageously in the power consumption, the image data is sent after storing it to the dual-port memory 17 once. The sending unit 18 does not transmit the first half part of frame in the area 1 yet, the second half part of frame in the area 2 is not promptly read out. After ending the transmission of the first half part of frame in the area 1, the sending unit 18 starts the transmission operation of the second half part of frame in the area 2.

Next, a description is given of a dividing method of an image in the case of the transmission of the still image.

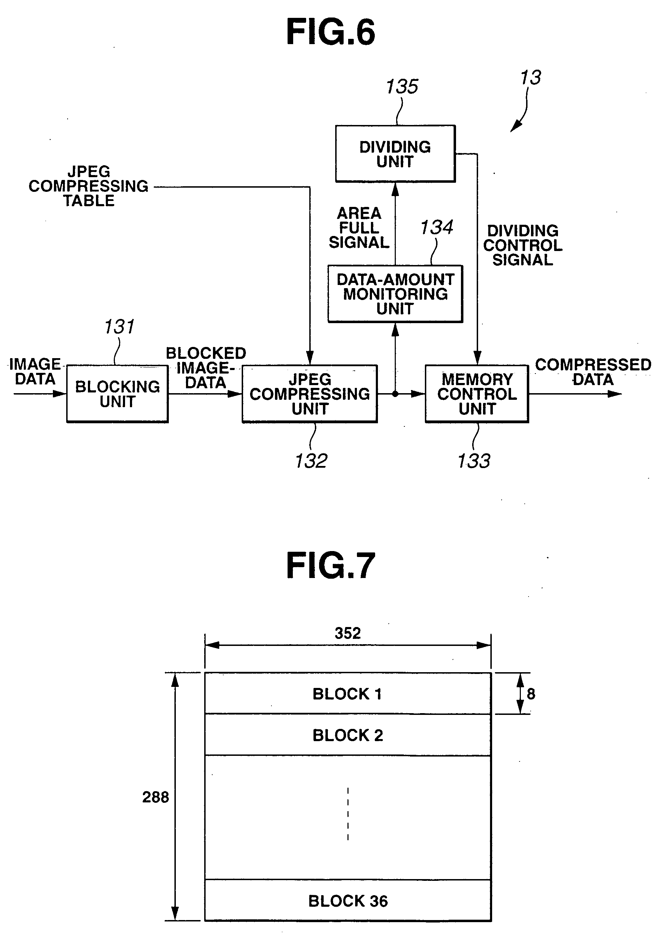

Fig. 6 is a block diagram showing the compressing unit 13 for dividing and compressing the image. Fig. 7 is an explanatory diagram of the blocking operation of the image.

A blocking unit 131 divides the image data inputted to the compressing unit 13 into blocks each having 8 lines as shown in Fig. 7. According to the first embodiment, the number of lines of image data is 288, the number of blocks as a result of division of 8 lines is 36. Each block is compressed, as one unit, by a JPEG compressing unit 132. The JPEG compressing unit 132 divides the image data into blocks each having 8 line so as to compress the image data based on a unit of 8x8 pixels. Referring to Fig. 6, the compressing-table setting unit 16 externally sets the JPEG compressing tables 14 and 15 so that the JPEG compressing unit 132 switches the compressing rate. In the transmission of the still image, the table of compression rate of 1/10 is set as described above. A memory control unit 133 stores the compressed data into a predetermined address of the dual-port memory 17. A data-amount monitoring unit 134, serving as a storage-amount monitoring unit, monitors the integrated amount of the compressed data. A dividing unit 135 outputs a division control signal for instructing whether the division is YES or NO to the memory control unit 133 based on the output of the integrated amount of the compressed data of the data-amount monitoring unit 134, and divides the compressed data.

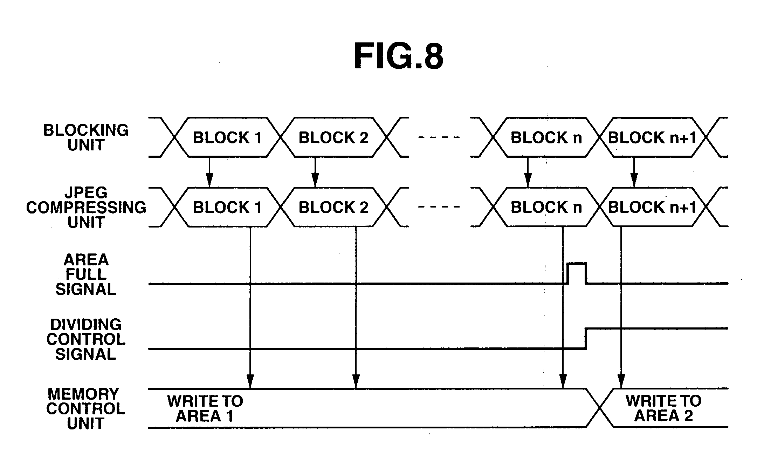

Next, a description is given of the operation for dividing the still image as shown in Fig. 6 with reference to a timing chart shown in Fig. 8.

The JPEG compressing unit 132 compresses the block data outputted from the blocking unit 131 every block. The memory control unit 133 writes the compressed data to the area 1. When the amount of data after compression is near a predetermined amount, that is, the upper limit of the area 1, the data-amount monitoring unit 134 sets, to the high level (hereinafter, referred to as the H level), an area full signal, serving as storage-amount detecting information. The dividing unit 135 sets the dividing control signal to the H level after the area full signal is at the H level. When the dividing control signal is at the H level, the memory control unit 133 stores the next block data (block n+1) and subsequent block data to the area 2.

According to the first embodiment, the above-described setting is established between the compressing rate of the moving image and that of the still image. Therefore, the transmission of the moving image and the still image uses the memory with the size corresponding to two frames of the compressed moving images, and the image data can be sent at the fixed baud rate. Thus, the transmission of the still image and the moving image is simple without greatly changing the configuration and control method of the transmission operation.

Further, the image is simply divided at an arbitrary position after compression by blocking the image in advance and compressing the individual images. The lack of one part of the transmission data on the transmission line does not influence on another block. In the compression of variable length in which the compressing rate varies depending on the image through the JPEG compression, the amount of data of the first half part of frame of the still image is constant. For example, the sending time is not short even in the case of increasing the compressing rate due to an abnormal portion of the first half part of the image frame. The sending interruption between the first half part of frame and the second half part of frame is prevented.

### (Second embodiment)

Next, a description is given of a monitoring camera to which an image transmission apparatus is applied according to the second embodiment of the present invention.

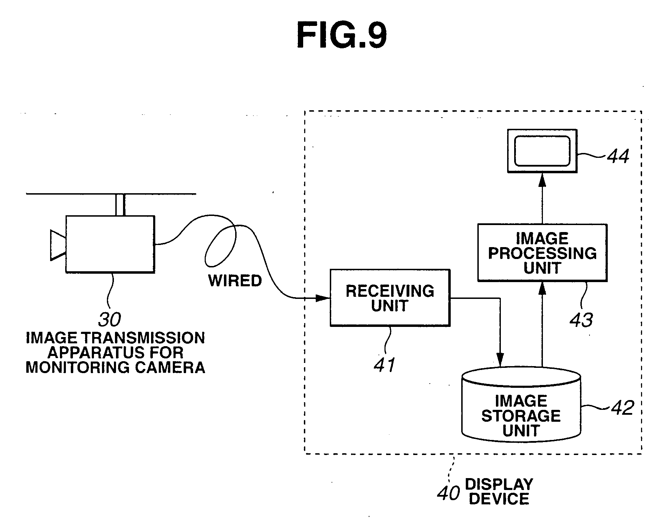

Fig. 9 schematically shows a monitoring camera system using the image transmission apparatus for monitoring camera according to the second embodiment of the present invention.

The monitoring camera system comprises: an image transmission apparatus 30 for a monitoring camera for picking-up the image at a remote position and sending image data by wiring manner according to the second embodiment of the present invention; and a display device 40 for storing and displaying the image data sent from the image transmission apparatus 30 for a monitoring camera.

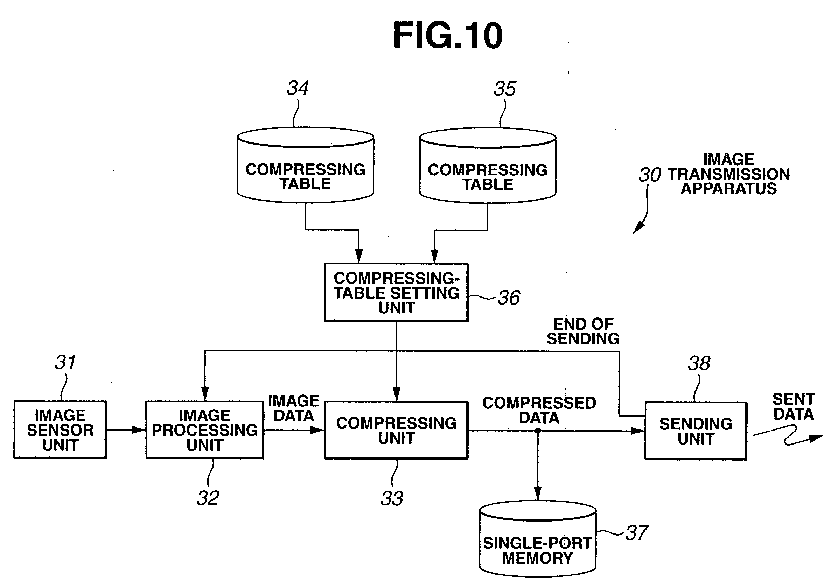

The image transmission apparatus 30 for a monitoring camera is installed at a predetermined remote position, and sends, by wiring manner, the image picked-up near the install position. This will be described later with reference to Fig. 10.

The display device 40 comprises: a receiving unit 41 for receiving a wiring signal from the image transmission apparatus 30 for a monitoring camera and obtaining the image data; an image storage unit 42 for temporarily storing the image data from the receiving unit 41; an image processing unit 43 for analyzing the image data stored in the image storage unit 42 and converting the analyzed data into a TV signal, serving as a display signal; and a monitor 44 for displaying the TV signal from the image processing unit 43.

Also in the monitoring camera system according to the second embodiment, a moving image or a still image is shot depending on the situation. In the usual monitoring operation, preferably, the frame rate is reduced so as to perform the check operation after the image storage in a short time. Further, in the case of detecting the occurrence of abnormal situation, the shooting operation of the moving image is performed so as to analyze the situation.

Fig. 10 shows the schematic configuration of the image transmission apparatus for monitoring camera according to the second embodiment.

The image transmission apparatus 30 for a monitoring camera according to the second embodiment comprises: an image sensor unit 31, serving as an image pickup unit, for picking-up an image by a CMOS image sensor; an image processing unit 32 for subjecting the image picked-up by the image sensor unit 31 to image processing, such as A/D conversion, correction of pixel lack, white balance, and γ correction; a compressing unit 33 for compressing by JPEG system the image-processed image data; a compressing-table setting unit 36 for setting, to the compressing unit 33, a compression table 34 for still image and a compression table 35 for moving image having compressing rates different therebetween; a single-port memory 37, serving as a storage unit, for temporarily storing the compressed data; and a sending unit 38 for sending, to the display device 40, the data stored in the single-port memory 37. The compressing tables 34 and 35 and the compressing-table setting unit 36 constitute an image compressing unit.

The setting method of the compressing rates of the moving image and the still image is the same as that according to the first embodiment. The compressing table has a compressing rate of 1/7 for still image and a compressing rate of 1/20 for moving image. That is, the compressing table 34 is for compressing rate of 1/7, and the compressing table 35 is for compressing rate of 1/20.

The image sensor unit 31 is a CMOS image sensor for outputting a VGA image having about 300 thousands (640x480) pixels.

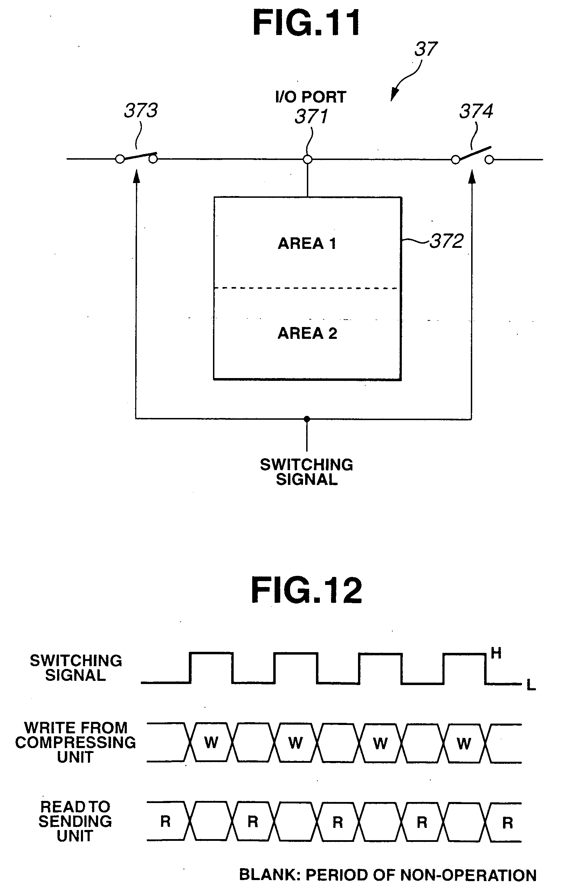

Fig. 11 is a schematic diagram showing the configuration of the single-port memory 37. Fig. 12 is a timing chart for explaining the operation shown in Fig. 11.

The single-port memory 37 comprises: one input/output port 371; a memory unit 372; and switches 373 and 374 that are alternately switched on/off by a switch signal. According to the second embodiment, upon writing the compressed image data from the compressing unit 33 to the memory unit 372 having two areas (1 and 2), the switch 373 is switched on and the switch 374 is switched off, and the image data is written by using the input/output port 371 as an input port. Upon reading out the image data written to the memory unit 372 therefrom, the switch 373 is switched off, the switch 374 is switched on, and the image data in the memory unit 372 is read out to the sending unit 38 by using the input/output port 371 as an output port.

Fig. 12 shows a switch signal for writing and reading and timings for writing and reading the compressed data in the single-port memory 37 shown in Fig. 11. When the switch signal is at the H level, the switch 373 is switched on, the switch 374 is switched off, the compressed data from the compressing unit 33 is written to the area 1 of the memory unit 372 via the input/output port 371, and the data is not read out to the sending unit 38. When the switch signal is at the low level (hereinafter, referred to as the L level), the switch 373 is switched off, the switch 374 is switched on, the compressed data from the compressing unit 33 is not written, and the compressed data written to the area 2 in the memory unit 372 is read out to the sending unit 38 via the input/output port 371.

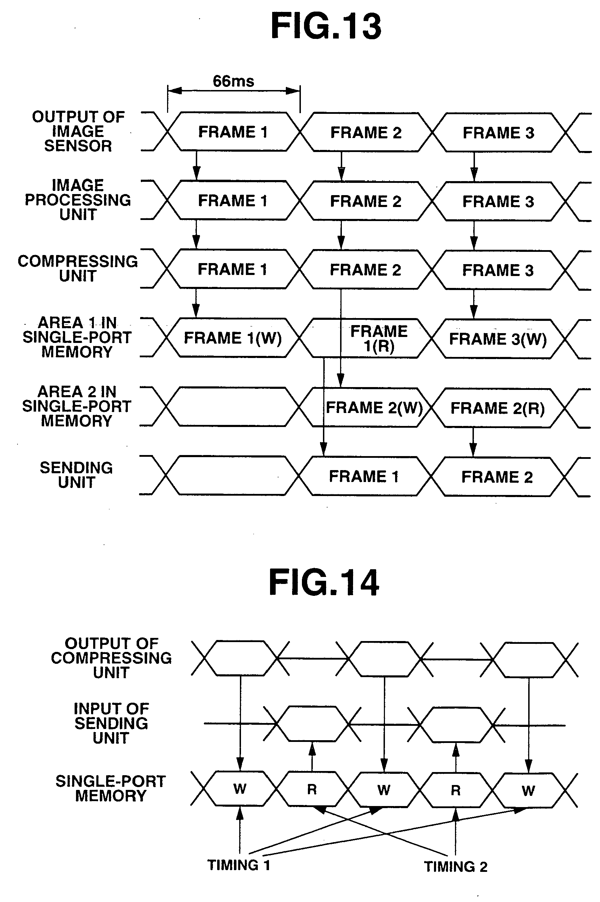

According to the second embodiment of the present invention, similarly to the first embodiment, the single-port memory 37 is divided into two areas (areas 1 and 2) for writing and readout operations. First, the compressed data of the image data is written to the area 1, then, upon starting the writing operation to the area 2 starts, the compressed data written to the area 1 is read out in accordance with the readout request from the sending unit 38, and the data is sent. Similarly, upon starting the writing operation of the compressed data to the area 1 after ending the writing operation of the compressed data to the area 2, the compressed data written to the area 2 is read out in accordance with the readout request from the sending unit 38 and the data is sent. Unlike the first embodiment, the writing operation and the readout operation are alternately switched fast in accordance with the switch signal as described with reference to Fig. 12. For the purpose of fast switching operation, similarly to the case of the dual-port memory 17 according to the first embodiment, the writing operation and the readout operation are simultaneously performed in macro view. Upon writing the data to the area 1 as shown in Fig. 13, the data in the area 2 is read out. Upon writing the data to the area 2, the data is read out from the area 1.

Next, a description is given of the operation for transmitting the moving image shown in Fig. 10 with reference to a timing chart shown in Fig. 13. In the timing chart shown in Fig. 13, although the writing operation to the area 1 of the single-port memory 37 and the readout operation from the area 2 are simultaneously performed, actually, they are accessed based on the time division as described with reference to Fig. 12.

Upon transmitting the moving image, the image sensor 31 outputs 15 images per second (1/15 sec = about 66 ms period), serving as a first frame-rate. The image processing unit 32 and the compressing unit 33 process the outputted image in real time. The compressing unit 33 compresses the image to 1/20 based on the JPEG system.

As shown in the timing chart for transmitting the moving image shown in Fig. 13, during the processing of the frame 1 by the image processing unit 32, the image processing unit 32 writes the compressed data of the frame 1 to the area 1, the image processing unit 32 writes the compressed data of the frame 2 to the area 2, and the image processing unit 32 writes the compressed data of the frame 3 to the area 1 again. During the processing of the frame 2 by the compressing unit 33, the sending unit 38 reads out the compressed data of the frame 1 written to the area 1 by the compressing unit 33 in the previous frame and sends the data. During the processing of the frame 3 by the compressing unit 33, the sending unit 38 reads out the compressed data of the frame 2 written to the area 2 and sends the data. As described above, the continuous processing is performed by the continuous operation of blocks with two-step buffers upon transmitting the moving image. The capacities of the areas 1 and 2 are obtained by compressing the image data of one frame to 1/20.

Fig. 14 is an access timing chart of the single-port memory 37. As described above, the output (writing) from the compressing unit 33 and the input (readout) to the sending unit 38 are exclusively operated. That is, the data is written to the area 1 from the compressing unit 33 at a timing 1. At a timing 2, the data is read from the area 2 out to the sending unit 38. As described above, the writing to the area 1 and the reading from the area 2 are performed in parallel. Although not shown, the writing to the area 2 and the reading from the area 1 are similarly performed.

According to the second embodiment, the image sensor unit 31 is a CMOS image sensor having an interface that can control the access timing. That is, although the image sensor unit 11 according to the first embodiment is a CCD image sensor in which readout area is fixed, the readout area can arbitrarily be set (switched) in the CMOS image sensor according to the second embodiment.

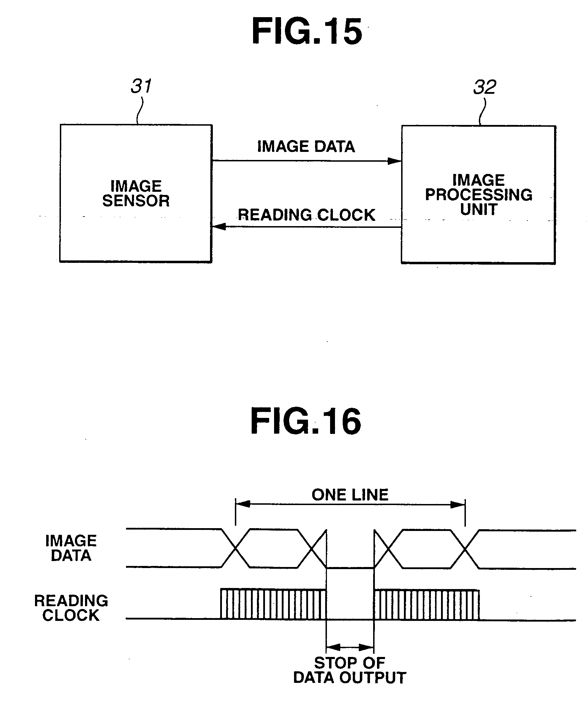

Fig. 15 is a connecting diagram in which an image sensor that can set the area like a CMOS image sensor and an image processing unit at the latter stage thereof are connected. Fig. 16 is a timing chart for reading of the image sensor shown in Fig. 15.

In the image sensor unit according to the second embodiment, as shown in the connecting diagram shown in Fig. 15, the image processing unit 32 supplies a readout clock to the image sensor unit 31. Referring to Fig. 16, the image processing unit 32 interrupts the supply operation of the readout clock, thereby temporarily stopping and delaying the data output from the image sensor unit 31.

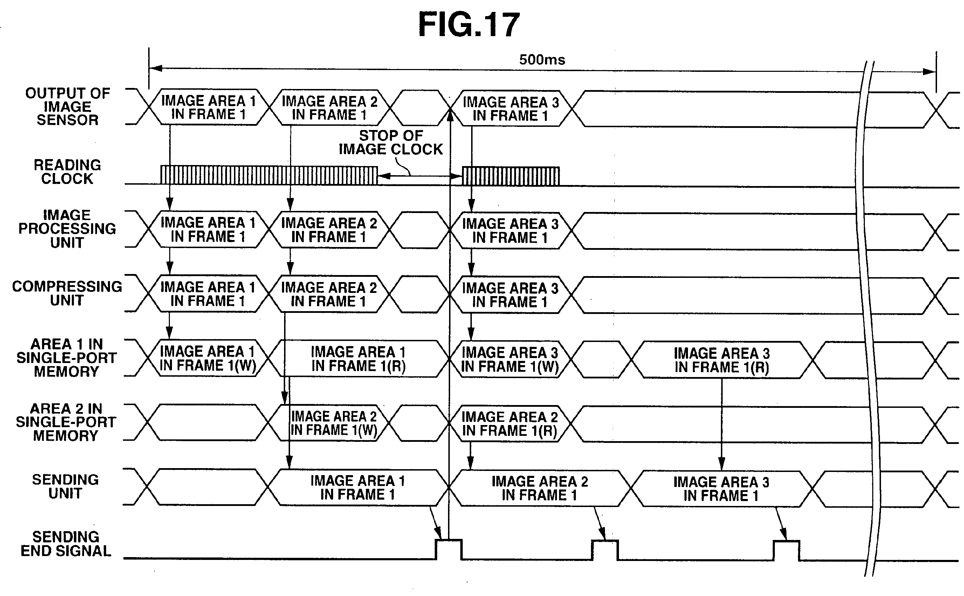

Next, a description is given of the operation for transmitting the still image shown in Fig. 10 with reference to a timing chart shown in Fig. 17.

Upon transmitting the still image, the image sensor unit 31 outputs two images per second (500 ms period), serving as a second frame-rate. Similarly to the transmission of the moving image, the image processing unit 32 and the compressing unit 33 process the inputted image in real time. Upon transmitting the still image, the image is compressed to 1/7, serving as three multiples of the compressing rate of the transmission of the moving image, for the purpose of the high image-quality.

As described above, in the two areas on the single-port memory 37, the image data in the transmission of the moving image is compressed to 1/20. Therefore, only data of 1/3 frame is stored in one area upon transmitting the still image. The data is stored in the areas 1 and 2 by dividing the compressed data having one frame.

As shown in a timing chart for transmitting the still image in Fig. 17, the still image of one frame is divided into three parts of an image area 1, an image area 2, and an image area 3. The data is subjected to the image processing and compression every image area, and is stored in the single-port memory 37. As shown in the timing chart shown in Fig. 17, after ending storing the data in the image area 1 to the area 1 of the single-port memory 37, the data in the image area 2 is stored to the area 2 of the single-port memory 37. Simultaneously, the sending unit 38 reads out the compressed data in the image area 1 from the area 1 of the single-port memory 37, and starts sending the data. After ending storing the data in the image area 2, the reading and sending of the data in the area 1 in the single-port memory 37 do not end yet. Therefore, the data in the area 2 in the single-port memory 37 is not read out right away. Then, the image processing unit 32 stops the supply operation of the clock signal to the image sensor unit 31, thereby delaying the output from the image area 3. After ending sending the data in the area 1, the sending unit 38 starts sending the data in the area 2. When the sending unit 38 sets a sending end signal to the H level upon ending sending the data in the area 1 of the single-port memory 37, the image processing unit 32 restarts supplying the clock signals to the image sensor unit 31 and, thus, the image sensor unit 31 outputs the image data in the image area 3 (refer to Figs. 10 and 15), and the compressing unit 33 stores the compressed data in the image area 3 to the area 1 of the single-port memory 37.

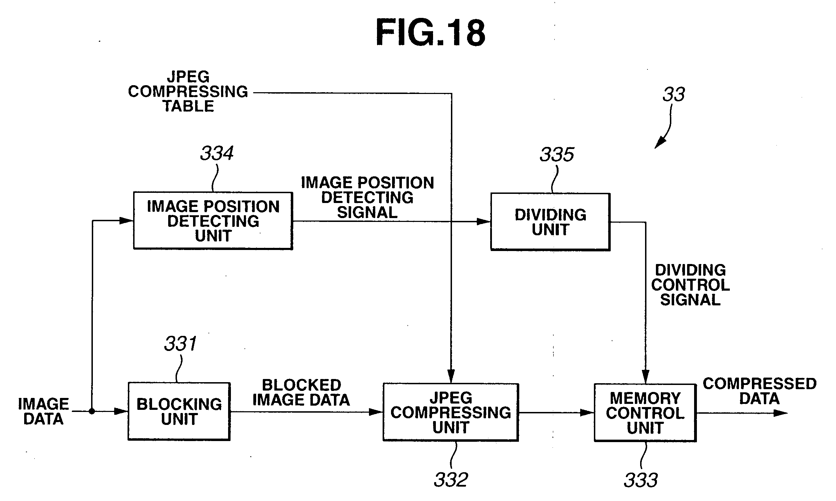

Fig. 18 is a block diagram showing the configuration of the compressing unit 33 that divides and compresses the image.

A blocking unit 331 divides the image data inputted to the compressing unit 33 into blocks each having 16 lines. According to the second embodiment, the number of lines of the image data is 480 and, therefore, the number of blocks is 30. Similarly to the first embodiment, a JPEG compressing unit 332 compresses the block as one unit. For the purpose of switching the compressing rate, the JPEG compressing unit 332 has the compressing-table setting unit 36 that externally sets the compressing table 34 or 35. Upon transmitting the still image, the compressing table of 1/7 serving as the compressing rate is set. A memory control unit 333 stores the compressed data in a predetermined address of the single-port memory 37. An image position detecting unit 334 detects the position on the screen of the image data. A dividing unit 335 outputs, to the memory control unit 333, a dividing control signal indicating whether or not the data is divided in accordance with the output from the image position detecting unit 334, and divides the compressed data.

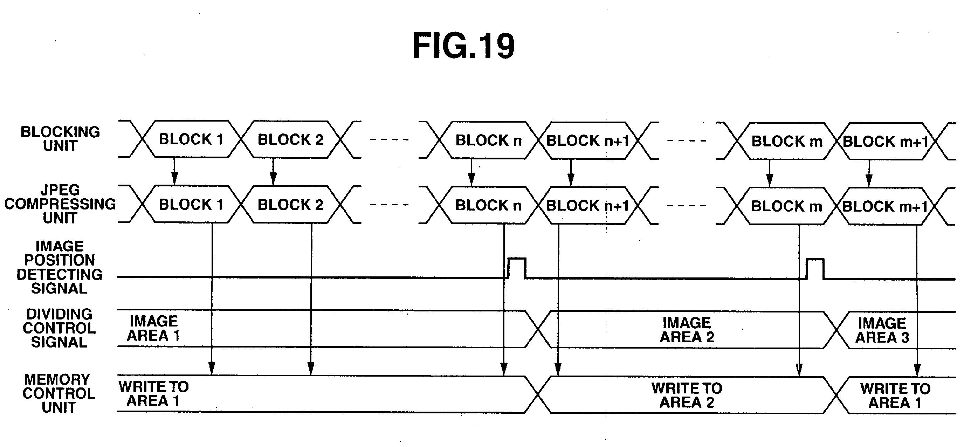

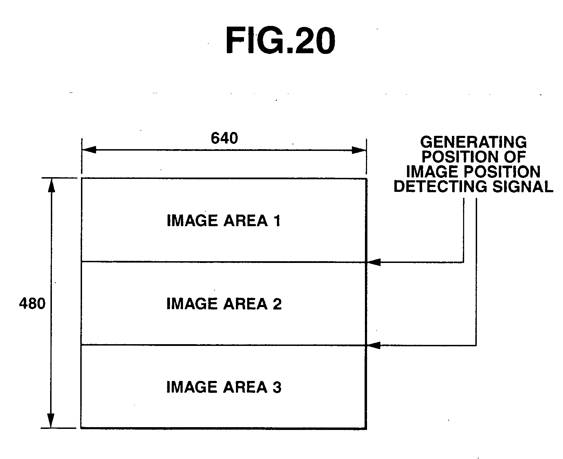

Next, a description is given of the operation for dividing the still image shown in Fig. 18 with reference to Figs. 19 and 20.

Fig. 19 is a timing chart for explaining the operation for dividing the still image shown in Fig. 18. Fig. 20 is an explanatory diagram of the image area.

The block data outputted from the blocking unit 331 is compressed every block by the JPEG compressing unit 332. The dividing unit 335 outputs the dividing control signal indicating the image area 1 to the compressing unit 333. The memory control unit 333 writes the compressed data to the area 1 of the single-port memory 37. When the position of the input image data is close to a predetermined position, that is, the upper limit of the image area 1, the image position detecting unit 334 sets, to the H level, an image position detecting signal as image position detecting information. For example, upon storing the compressed data of an n-th block n, the image position detecting signal is set to the H level. When the image position detecting signal is set to the H level, the dividing unit 335 outputs the dividing control signal indicating the image area 2 to the memory control unit 333. When the dividing control signal indicates the image area 2, the memory control unit 333 stores in the area 2 the data in the next block (block n+1) and subsequent data.

When the position of the re-input image data is at a predetermined position, that is, is close to the upper limit of the image area 2, the image position detecting unit 334 sets the image position detecting signal to the H level. For example, upon storing the compressed data of an m-th block m, the image position detecting signal is set to the H level. When the image position detecting signal is set to the H level, the dividing unit 335 outputs the dividing control signal indicating the image area 3 to the memory control unit 333. When the dividing control signal indicates the image area 3, the memory control unit 333 stores the data in the next block (block m+1) and subsequent block data to the area 1.

According to the second embodiment, the compressing rate of the moving image and the compressing rate of the still image are set as described above. Therefore, upon transmitting the moving image and the still image, the moving image uses a memory of 1/3 size of the compressed data of the still image, and the data is sent at the fixed baud rate. Thus, the transmission of the moving image and the transmission of the still image are simple without changing the configuration and the control method.

The first and second embodiments of the present invention can variously be modified. According to the first and second embodiments, the image is the CIF image or VGA image. However, the image may have another number of pixels. Further, although the dual-port memory and the single-port memory are used for time division according to the first and second embodiments of the present invention, the memory can be used by switching bus of a frame memory or bus of a plurality of single-port memories. Furthermore, according to the first and second embodiments, although the JPEG system is used as a compressing one, JPEG 2000, anther noninverting compressing system, and inversing compressing system can be used.

The present invention can widely be applied to an image transmission apparatus of the moving image data and the still image data. In the case of transmitting the moving image data and the still image data at the same baud rate, the amount of memories for communication can be reduced without deteriorating the image quality (number of pixels).

Having described the preferred embodiments of the invention referring to the accompanying drawings, it should be understood that the present invention is not limited to those precise embodiments and various changes and modifications thereof could be made by one skilled in the art without departing from the spirit or scope of the invention as defined in the appended claims.

## Claims

1. An image transmission apparatus having an image pickup unit for outputting image data of a subject, for picking-up images of the subject and transmitting image data of the subject at a first frame-rate and a second frame-rate lower than the first frame-rate, **characterized by** comprising:
an image compressing unit that switches compressing rates so that the amount of image data after compression per unit time of the second frame-rate is not more than the amount of image data after compression per unit time of the first frame-rate and that compresses the image data outputted from the image pickup unit and outputs compressed data;
a storage unit that temporarily stores the compressed data; and
a sending unit that sends, at a fixed baud rate, the compressed data stored in the storage unit.

2. The image transmission apparatus according to Claim 1, **characterized in that** the image compressing unit comprises a dividing unit that divides the compressed data of one frame by a predetermined amount of data upon transmitting the image data at the second frame-rate.

3. The image transmission apparatus according to Claim 2, **characterized in that** the image compressing unit comprises an image position detecting unit that detects the position on a screen of the image data outputted by the image pickup unit and outputs image position detecting information, and
the dividing unit divides the compressed data of one frame in accordance with the image position detecting information outputted by the image position detecting unit.

4. The image transmission apparatus according to Claim 2, **characterized in that** the image compressing unit comprises a storage-amount monitoring unit that monitors the amount of compressed data outputted to the storage unit and outputs storage-amount detecting information, and
the dividing unit divides the compressed data of one frame based on the storage-amount detecting information.

5. The image transmission apparatus according to any one of Claims 2 to 4, **characterized in that** the image compressing unit comprises a blocking unit that blocks the image data of one frame outputted by the image pickup unit every predetermined image size, and outputs blocked image data, and
the image compressing unit compresses the blocked image data as one unit, and the dividing unit divides the compressed data of one frame based on a unit of the block.
